# EUROPEAN PATENT APPLICATION

(11) **EP 1 798 637 A2**
(43) Date of publication of application: **20.06.2007**
(21) Application number: 06077061.7
(22) Date of filing: 20.11.2006
(51) Int. Cl.: G06F 3/14

(54) **Network display apparatus, computer, and method of controlling the computer**

(30) Priority: 16.12.2005 KR 20050124455
(71) Applicant: Samsung Electronics Co., Ltd., Suwon-si, Gyeonggi-Do (KR)
(72) Inventor: You, Kwang-hoon, Suwon-si Gyeonggi-do (KR)
(74) Representative: Hylarides, Paul Jacques

(57) **Abstract**

A network display apparatus, a computer and a method of controlling the computer, wherein text information inputted to the computer is delivered to the network display apparatus. The computer includes a transceiving unit to transmit and/or receive data to and/or from at least one external network display apparatus, a user input unit to input text information, and a control unit to output the input text information to the at least one external network display apparatus via the transceiving unit when the input text information is inputted through the user input unit.

## Description

### CROSS-REFERENCE TO RELATED APPLICATIONS

This application claims priority under 35 U.S.C. 119 §(a) from Korean Patent Application No.2005-0124455, filed on December 16, 2005, in the Korean Intellectual Property Office, the disclosure of which is incorporated herein in its entirety by reference.

### BACKGROUND OF THE INVENTION

### Field of the Invention

The present general inventive concept relates to a network display apparatus, a computer to communicate with the network display apparatus, and a method of controlling the computer, and more particularly, to a network display apparatus, a computer and a method of controlling the computer, which are capable of transmitting and/or receiving contents information.

### Description of the Related Art

In general, a display apparatus, such as an LCD (Liquid Crystal Display) and a PDP (Plasma Display Panel), has been used to display images in various fields such as TVs, computer monitors and the like.

Conventionally, there has been proposed a display apparatus, such as a monitor, having a function to display data received as images via a network or a function to transmit/receive control signals via the network, in addition to a simple function to display a video signal received from the computer.

In the case of the display apparatus with the aforementioned conventional network function, a plurality of display apparatuses are connected with a server computer via an LAN (Local Area Network). Each display apparatus can receive contents information pre-stored in the server computer and reproduce the contents information.

However, the display apparatus with the conventional network function can receive only the pre-stored contents information from the server computer. In other words, a user who uses the server computer may have an inconvenience in that the user can not deliver any information, e.g., notifications, to the display apparatus with a network function which is connected to the server computer.

### SUMMARY OF THE INVENTION

The present general inventive concept provides a network display apparatus, a computer and a method of controlling the computer, wherein text information inputted to the computer is delivered to the network display apparatus.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a computer having a transceiving unit to transmit and/or receive data to and/or from at least one external network display apparatus, the computer comprising a user input unit to input text information, and a control unit to output the input text information to the at least one external network display apparatus via the transceiving unit when the input text information is inputted through the user input unit.

The computer may further comprise an interface picture generating unit to generate an interface picture with a text input menu to input the input text information, and a display unit to display the interface picture, wherein the control unit may output the input text information inputted through the text input menu via the transceiving unit.

The interface picture may further comprise a point-of-output-time selection menu to input a point of output time when the input text information is to be outputted via the transceiving unit, and wherein the control unit may output the input text information inputted at a point of time selected through the point-of-output-time selection menu to the at least one external network display apparatus via the transceiving unit.

The computer may further comprise a storage unit to store pre-set contents information, and the control unit may output at least one of the contents information stored in the storage unit and the input text information to the at least one external network display apparatus via the transceiving unit when at least one of a transmission input signal from the user input unit and a transmission input signal from the transceiving unit is applied to the control unit.

The contents information may comprise at least one of movie information, music information, photograph information, file information, and Internet information.

The transceiving unit may transmit and/or receive the contents information and the input text information using a FTP (File Transfer Protocol) communication method.

The tranceiving unit may transmit and/or receive the data to and/or from a plurality of external network display apparatuses, the interface picture generating unit may generate the interface picture with a display apparatus selection menu to select at least one of the plurality of external network display apparatuses, and the control unit may output the input text information to the external network display apparatus selected through the display apparatus selection menu via the transceiving unit.

The foregoing and/or other aspects and utilities of the present general inventive concept can also be achieved by providing a network display apparatus having a display unit on which an image is displayed, comprising a transceiving unit to transmit and/or receive pre-set contents information and text information inputted by a user to and/or from an external computer via a network, a signal processor to process the contents information and the input text information and to output the processed contents information and input text information to the display unit, and a control unit to control the signal processor to display the contents information and the input text information on the display unit when the contents information and the input text information are received in the control unit via the transmitting and/or receiving unit.

The control unit may control the signal processor to display a picture with the input text information and a picture with the contents information separately.

The control unit may control the signal processor to display the picture with the input text information and the picture with the contents information in the form of one of a PIP (Picture In Picture), a PBP (Picture By Picture), a POP (Picture Out Picture) and an OSD (On Screen Display) on the display unit.

The contents information may comprise at least one of movie information, music information, photograph information, file information, and Internet information.

The foregoing and/or other aspects and utilities of the present general inventive concept can also be achieved by providing a method of controlling a computer having a transceiving unit to transmit and/or receive data to and/or from at least one external network display apparatus, the method comprising inputting text information from a user, and outputting the input text information to the at least one external network display apparatus via the transceiving unit.

The method may further comprise displaying an interface picture with a text input menu to input the text information, wherein the inputting of the text information may comprise inputting the text information through the text input menu.

The method may further comprise displaying the interface picture with a point-of-output-time selection menu to input a point of output time when the input text information is to be outputted via the transceiving unit, wherein the outputting of the input text information may comprise outputting the input text information inputted at a point of time selected through the point-of-output-time selection menu to the at least one external network display apparatus.

The method may further comprise storing the contents information, and inputting a transmission input signal, wherein the outputting of the input text information may comprise outputting at least one of the stored contents information and the input text information to the at least one external network display apparatus.

The foregoing and/or other aspects and utilities of the present general inventive concept can also be achieved by providing a method of displaying an image on a network display apparatus, comprising transmitting and/or receiving pre-set contents information and text information inputted by a user to and/or from an external computer via a network, processing the contents information and the input text information and outputting the processed contents information and input text information to a display unit, and controlling a signal processor to display the contents information and the input text information on the display unit.

The displaying may occur when the contents information and the input text information are received in a control unit via a transceiving unit.

The foregoing and/or other aspects and utilities of the present general inventive concept can also be achieved by providing a system to transmit and/or receive data, comprising a computer having a first transceiving unit, comprising a user input unit to input text information, and a control unit to output the input text information via the first transceiving unit when the input text information is inputted through the user input unit, a network display apparatus, comprising, a display unit on which an image is displayed, and a second transceiving unit to transmit and/or receive the text information inputted by a user to and/or from the computer via a network.

The system may further comprise a signal processor to process the input text information and to output the processed input text information to the display unit, and a control unit to control the signal processor to display the input text information on the display unit when the input text information are received in the control unit via the second transceiving unit.

The second transceiving unit may also transmit and/or receive pre-set contents information.

The foregoing and/or other aspects and utilities of the present general inventive concept can also be achieved by providing a method of controlling a system to transmit and/or receive data, the method comprising inputting text information by a user input unit, outputting the input text information via a first transceiving unit when the input text information is inputted through the user input unit, displaying an image on a display unit, and transmitting and/or receiving the text information inputted by a user to and/or from the computer via a network.

The foregoing and/or other aspects and utilities of the present general inventive concept can also be achieved by providing a computer-readable recording medium to execute program codes to perform a method of a computer having a transceiving unit to transmit and/or receive data to and/or from at least one external network display apparatus, the method comprising, inputting text information from a user, and outputting the input text information to the at least one external network display apparatus via the transceiving unit.

The foregoing and/or other aspects and utilities of the present general inventive concept can also be achieved by providing a computer-readable recording medium to execute program codes to perform a method of a computer having a transceiving unit to transmit and/or receive data to and/or from at least one external network display apparatus, the method comprising transmitting and/or receiving pre-set contents information and text information inputted by a user to and/or from an external computer via a network, processing the contents information and the input text information and outputting the processed contents information and input text information to a display unit, and controlling a signal processor to display the contents information and the input text information on the display unit.

The foregoing and/or other aspects and utilities of the present general inventive concept can also be achieved by providing a computer-readable recording medium to execute program codes to perform a method of a computer having a transceiving unit to transmit and/or receive data to and/or from at least one external network display apparatus, the method comprising, inputting text information by a user input unit, outputting the input text information via a first transceiving unit when the input text information is inputted through the user input unit, displaying an image on a display unit, and transmitting and/or receiving the text information inputted by a user to and/or from the computer via a network.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a schematic perspective view illustrating a system having a plurality of network display apparatuses and a computer according to an embodiment of the present general inventive concept;
FIG. 2 is a control block diagram illustrating a system having a network display apparatus and a computer according to an embodiment of the present general inventive concept; and
FIG. 3 is a flow chart illustrating operation of a network display apparatus and a computer according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

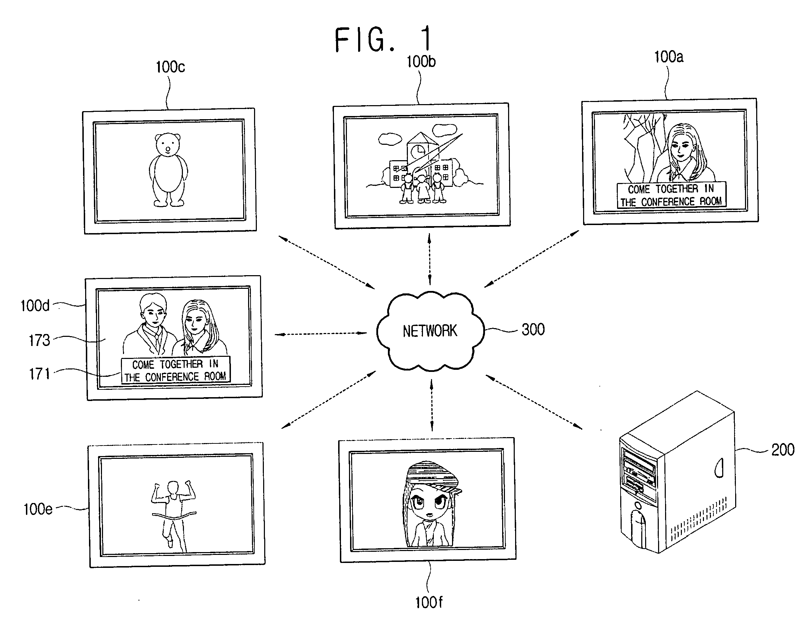

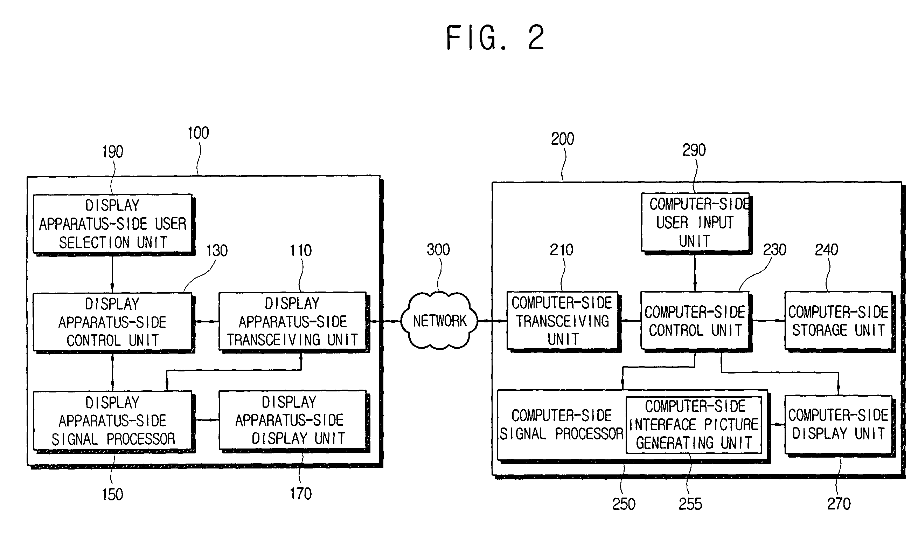

Referring to FIGS. 1 and 2, a system of the present general inventive concept includes a computer 200 connected to a network 300, and one or more network display apparatuses 100 (100a, 100b, 100c, 100d, 100e, and 100f) connected to the computer 200 via the network 300.

The computer 200 transmits data to the network display apparatuses 100a, 100b, 100c, 100d, 100e and 100f via the network 300. The network display apparatuses 100a, 100b, 100c, 100d, 100e and 100f receive the data transmitted via the network 300 and display the received data as images or output the received data as sound.

In the present embodiment, the computer 200 and the network display apparatuses 100a, 100b, 100c, 100d, 100e and 100f may be interconnected via the network 300, such as an LAN (Local Area Network), and exchange the data according to corresponding communication protocols.

As illustrated in FIG. 1, the computer 200 communicates with the network display apparatuses 100a, 100b, 100c, 100d, 100e and 100f. Although the computer 200 may be connected to communicate with the plurality of display apparatuses 100a, 100b, 100c, 100d, 100e and 100f, FIG. 2 illustrates only one network display apparatus 100 via the network 300 in order to simplify the description. The network display apparatus 100 can be connected to an external apparatus via the network 300 to exchange data therebetween. Therefore, the network display apparatus 100 includes a display unit as well as a transceiving unit, such as an LAN card, to allow the display unit to exchange data with the external apparatus. In this embodiment, the network display apparatus 100 may include a CPU, a north bridge, which is a chip set such as an MCH (Memory Control Hub), and a south bridge, which is a chip set such as an ICH (I/O Control Hub), if necessary.

In the present embodiment, the computer 200 includes a computer-side transceiving unit 210 to allow the computer 200 to communicate with the network display apparatus 100, a computer-side user input unit 290, a computer-side storage unit 240 to store data, a computer-side signal processor 250, a computer-side display unit 270, and a computer-side control unit 230 to control the transceiving unit 210, the computer-side user input unit 290, the computer-side storage unit 240, the computer-side signal processor 250, and the computer-side display unit 270.

The computer-side transceiving unit 210 exchanges data with the external apparatus, such as the network display apparatus 100, via the network 300. The data to be exchanged may include at least one of contents information and input text information, which will be described later. The computer-side transceiving unit 210 can transceive data via a TCP/IP protocol and has its unique IP address. The computer-side transceiving unit 210 may transceive data via a data transfer protocol, such as a FTP (File Transfer Protocol), under a TCP/IP communication protocol. In this embodiment, the computer-side transceiving unit 210 may also include an LAN card.

The computer-side signal processor 250 processes a video signal and outputs the processed video signal to the computer-side display unit 270. In this embodiment, the computer-side signal processor 250 may further include a computer-side interface picture generating unit 255 to generate an interface picture. The computer-side signal processor 250 mixes the generated interface picture with the processed video signal and displays a mixture of the interface picture and the video signal on one region of the computer-side display unit 270.

The computer-side display unit 270 receives the video signal outputted from the computer-side signal processor 250 and displays the received video signal as an image on a screen. The computer-side display unit 270 may include various types of display modules such as a DLP (Digital Light Processing), an LCD (Liquid Crystal Display), a PDP (Plasma Display Panel) and the like.

The computer-side user input unit 290 may be implemented with a plurality of input keys, buttons and the like, to enable the user to input or select any function. In the present embodiment, the user can input the input text information through the computer-side user input unit 290. The input text information may include information such as urgent matters, notifications, and the like, to be transmitted to the network display apparatus 100 connected with the computer 200.

The computer-side storage unit 240 stores pre-set contents information. The preset contents information may include moving picture information, music information, photograph information, file information, Internet information, and the like. More specifically, the preset contents information may include files with extensions such as avi, mpeg, mp3, jpeg, hwp, html, and the like, information inputted via an external storage medium, information inputted via the network 300, etc. In the present embodiment, the computer-side storage unit 240 may be any device, such as a hard disk, a RAM, a ROM or the like, if it has the ability to store data.

The computer-side control unit 230 outputs the input text information and the contents information to the network display apparatus 100 via the computer-side transceiving unit 210.

The computer-side control unit 230 controls the computer-side interface picture generating unit 255 to generate the interface picture having a text input menu enabling the user to input the input text information in a predetermined input text-information transmission mode. The input text-information transmission mode is a mode in which the user inputs the input text information, so as to transmit the text input menu to the network display apparatus 100.

Therefore, in terms of the input text-information transmission mode, the user can separately select this mode as a mode of the computer 200, and also the computer-side control unit 230 can recognize the mode of the computer 200 as the input text information transmission mode when the user manipulates a key to generate the interface picture with the text input menu to input the input text information.

When the interface picture with the text input menu is generated on the computer-side display unit 270 and the user inputs any input text information to the text input menu through the computer-side user input unit 290, the computer-side control unit 230 can output the input text information inputted through the text input menu via the computer-side transceiving unit 210.

The computer-side control unit 230 can also control the computer-side interface picture generating unit 255 to generate the interface picture further including a point-of-output-time selection menu to input a point of output time when the input text information is outputted to the network display apparatus 100. If the user inputs the point of output time through the point-of-output-time selection menu through the computer-side user input unit 290, the computer-side control unit 230 can output the input text information inputted at the point of output time selected through the point-of-output-time selection menu to the network display apparatus 100 via the computer-side transceiving unit 210.

In the present embodiment, if the computer 200 is connected to the plurality of network display apparatuses 100 via the network 300, the computer-side control unit 230 can control the computer-side interface picture generating unit 255 to generate the interface picture further including a display apparatus selection menu to select at least one of the plurality of network display apparatuses 100.

Furthermore, if the user selects all or some of the network display apparatuses 100 through the display apparatus selection menu by means of the computer-side user input unit 290, the computer-side control 230 can output the input text information only on the network display apparatus 100 which is selected through the display apparatus select menu.

If at least one of a transmission input signal from the computer-side user input unit 290 and a transmission input signal from the computer-side transceiving unit 210 is applied to the computer-side control unit 230, the computer-side transceiving unit 210 may output at least one of the contents information stored in the computer-side storage unit 240 and the input text information to the network display apparatus 100..

In other words, if the user inputs an instruction (transmission input signal) to transmit at least one of the contents information and the input text information to the network display apparatus 100, the computer-side control unit 230 outputs at least one of the contents information and the input text information to the network display apparatus 100 in accordance with the input transmission input signal. At this time, if the user reserves a time when the input text information is to be transmitted, the transmission input signal is applied to the computer-side control unit 230 to transmit the input text information at the reserved time.

Furthermore, if the user applies the transmission input signal through a display apparatus-side user selection unit 190 of the network display apparatus 100 to be described later, the transmission input signal from the network display apparatus 100 is applied to the computer-side transceiving unit 210 through a display apparatus-side transceiving unit 110. Then, the computer-side control unit 230 outputs the contents information to the network display apparatus 100 in accordance with the transmission input signal inputted from the computer-side transceiving unit 210.

The network display apparatus 100 may include a display apparatus-side display unit 170, the display apparatus-side transceiving unit 110, a display apparatus-side signal processor 150, a display apparatus-side user select unit 190, and a display apparatus-side control unit 130 to control the display apparatus-side display unit 170, the display apparatus-side transceiving unit 110, the display apparatus-side signal processor 150, and the display apparatus-side user select unit 190.

The display apparatus-side transceiving unit 110 transmits and/or receives data from and/or to the computer 200 via the network 300. The data may include at least one of the contents information and the input text information, as described above. The display apparatus-side transceiving unit 110 may be provided to correspond to the above-described computer-side transceiving unit 210 to exchange the data of the same format therebetween. In the present embodiment, the display apparatus-side transceiving unit 110 may include an LAN card.

The display apparatus-side signal processor 150 processes the video signal and outputs the processed video signal to the display apparatus-side display unit 170. Referencing FIG. 1, the display apparatus-side signal processor unit 150 processes the video signal such that a picture 173 which contains the contents information and a picture 171 containing the input text information are displayed separately. In the present embodiment, the display apparatus-side signal processor 150 may include an OSD generating unit (not illustrated) to display the input text information as an OSD picture on the display apparatus-side display unit 170. Alternatively, the display apparatus-side signal processor 150 may include a first signal processor (not illustrated) to process the picture 173 containing the contents information, a second signal processor (not illustrated) to process the picture 171 containing the input text information, and a picture processor (not illustrated) to process the pictures 171 and 173 processed in the first signal processor and the second processor into a PIP (Picture In Picture) and a PBP (Picture By Picture) or a POP (Picture Out Picture), respectively, and to output the PIP and the PBP or the POP to the display apparatus-side display unit 170. In this embodiment, the display apparatus-side signal processor 150 may include components to process video signals, such as a graphic card, a north bridge, a scaler, and the like.

The display apparatus-side display unit 170 is inputted with the video signal outputted from the display apparatus-side signal processor 150 and displays an image on the screen. The display apparatus-side display unit 170 may include various types of display modules such as a DLP (Digital Light Processing), an LCD (Liquid Crystal Display), a PDP (Plasma Display Panel), and the like.

The display apparatus-side selection unit 190 may be implemented in various ways with a plurality of input keys, buttons and the like, to input or to select any function.

Upon receiving at least one of the contents information and the input text information via the display apparatus-side transceiving unit 110, the display apparatus-side control unit 130 controls the display apparatus-side signal processor 150 to display at least one of the contents information and the input text information on the display apparatus-side display unit 170.

The display apparatus-side control unit 130 controls the display apparatus-side signal processor 150 to display the picture 171 with the input text information and the picture 173 with the contents information separately on the display apparatus-side display unit 170. Furthermore, the display apparatus-side control unit 130 may control the display apparatus-side signal processor unit 150 to display the picture 171 with the input text information and the picture 173 with the contents information on the display apparatus-side display unit 170 in the form of a PIP (Picture In Picture), a PBP (Picture By Picture), a POP (Picture Out Picture) or an OSD (On Screen Display).

When the transmission input signal to read the contents information from the computer 200 is selected through the display apparatus-side user selection unit 190, the display apparatus-side control unit 130 controls the display apparatus-side transceiving unit 110 to output the transmission input signal to the computer 200. Then, the contents information stored in the computer-side storage unit 240 is applied to the display apparatus-side transceiving unit 110 in accordance with the transmission input signal, and the display apparatus-side control unit 130 controls the display apparatus-side signal processor 150 to process the applied contents information and display the processed contents information on the display apparatus-side display unit 170.

Referring to FIGS. 1 and 2, the plurality of network display apparatuses 100 (100a, 100b, 100c, 100d, 100e, and 100f) may be connected to the computer 200. Text information stated as "Come together in the conference room" may be inputted through the text input menu. The interface picture further including a display apparatus selection menu to select at least one of the plurality of network display apparatuses 100 is generated on the computer-side display unit 270, and the user can select some (for example, display apparatus 100a and display apparatus 100d) of the plurality of display apparatuses. Then, the contents information is displayed on main pictures (picture 173 in FIG. 1) of the display apparatuses 100a and 100d and the input text information stated as "Come together in the conference room" is displayed on sub pictures (picture 171 in FIG. 1).

Now, an operation of the network display apparatus 100 and the computer 200 according to the embodiment of the present general inventive concept will be described.

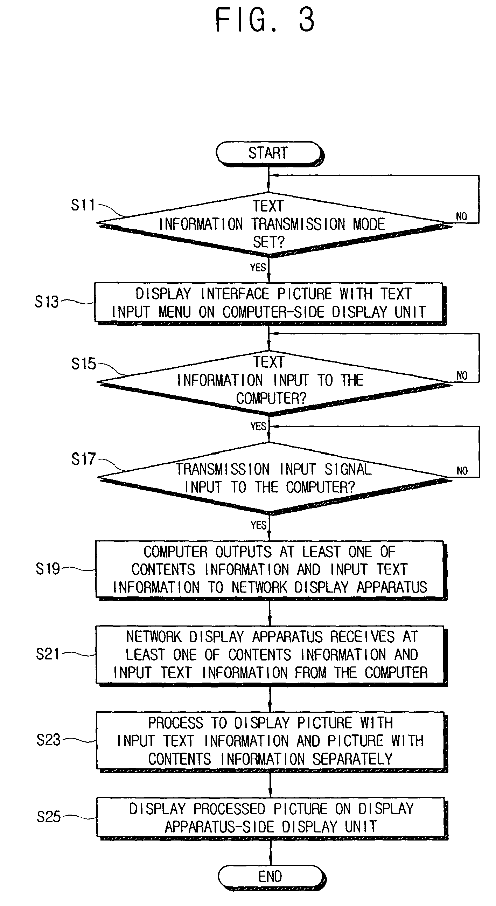

Referring to FIGS. 1-3, when the text information transmission mode is set in the computer 200 at operation S11, the computer-side control unit 230 controls the computer-side signal processor 250 to display the interface picture with the text input menu on the computer-side display unit 270 at operation S13. At operation S13, the interface picture may be displayed on the display apparatus-side display unit 170 of the network display apparatus 100.

The user may input the text information to the computer 200 through the text input menu using the computer-side user input unit 290 at operation S15. When the user inputs the transmission input signal to transmit the input text information using the computer-side user input unit 290 at operation S17, the computer-side control unit 230 controls the input text information to be outputted to the network display apparatus 100 at operation S19.

The computer-side storage unit 240 may store the contents information. If the transmission input signal to transmit the contents information is inputted from the computer-side user input unit 290 or the computer-side transceiving unit 210, the computer-side control unit 230 controls the contents information to be outputted to the network display apparatus 100 at operation S19.

If the network display apparatus 100 receives at least one of the contents information and the input text information via the display apparatus-side transceiving unit 110 at operation S21, the display apparatus-side control unit 130 controls the display apparatus-side signal processor 150 to generate and display picture(s) with the information on the display apparatus-side display unit 170. At this time, the display apparatus-side control unit 130 controls the display apparatus-side signal processor 150 to display the picture 171 with the input text information and the picture 173, with the contents information separately at operation S23. Next, the display apparatus-side control unit 130 controls the pictures processed in the display apparatus-side signal processor unit 150 to be displayed on the display apparatus-side display unit 170 at operation S25. More specifically, the display apparatus-side control unit 130 controls the display apparatus-side signal processor 150, such that one of the picture 171 with the input text information and the picture 173 with the contents information is displayed on the display apparatus-side display unit 170 as a main picture, and the other of these pictures 173 and 171 is displayed on the display apparatus-side display unit 170 as a sub picture. Here, the sub picture may be implemented in various ways with an OSD, a PIP, a PBP, a POP, or the like, as illustrated in FIG. 2.

As apparent from the above description, the present general inventive concept provides a network display apparatus to transmit and/or receive data to and/or from the network display apparatus, a computer and a method of controlling the computer, which are capable of delivering text information inputted to the computer to the network display apparatus.

Consequently, it is possible to inform users who use the network display apparatuses connected to the computer of input text information such as notifications, urgent matters and the like, by inputting such input text information to the computer.

The present general inventive concept can also be embodied as computer-readable codes on a computer-readable recording medium. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A computer having a transceiving unit to transmit and/or receive data to and/or from one or more external network display apparatuses, comprising:
a user input unit to input text information; and
a control unit to output the input text information to the one or more external network display apparatuses via the transceiving unit when the input text information is inputted through the user input unit.

2. The computer according to claim 1, further comprising:
an interface picture generating unit to generate an interface picture with a text input menu to input the input text information; and
a display unit on which the interface picture is displayed,
wherein the control unit outputs the input text information inputted through the text input menu via the transceiving unit.

3. The computer according to claim 2, wherein:
the interface picture further comprises a point-of-output-time selection menu to input a point of output time when the input text information is to be outputted via the transceiving unit; and
the control unit outputs the input text information inputted at a point of output time selected through the point-of-output-time selection menu to the one or more external network display apparatuses via the transceiving unit.

4. The computer according to claim 1 or 2, further comprising:
a storage unit to store pre-set contents information,
wherein the control unit outputs at least one of the contents information stored in the storage unit and the input text information to the one or more external network display apparatus via the transceiving unit when at least one of a transmission input signal from the user input unit and a transmission input signal from the transceiving unit is applied to the control unit.

5. The computer according to claim 4, wherein the contents information comprises:
at least one of movie information, music information, photograph information, file information, and Internet information.

6. The computer according to claim 4, wherein the transceiving unit transmits and/or receives the contents information and the input text information using an FTP (File Transfer Protocol) communication method.

7. The computer according to claim 2, wherein the tranceiving unit transmits and/or receives the data to and/or from a plurality of external network display apparatuses,
wherein the interface picture generating unit generates the interface picture with a display apparatus selection menu to select at least one of the plurality of external network display apparatuses, and
wherein the control unit outputs the input text information to the external network display apparatus selected through the display apparatus selection menu via the transceiving unit.

8. A network display apparatus having a display unit on which an image is displayed, comprising:
a transceiving unit to transmit and/or receive pre-set contents information and text information inputted by a user to and/or from an external computer via a network;
a signal processor to process the contents information and the input text information and to output the processed contents information and input text information to the display unit; and
a control unit to control the signal processor to display the contents information and the input text information on the display unit when the contents information and the input text information are received in the control unit via the transceiving unit.

9. The network display apparatus according to claim 8, wherein the control unit controls the signal processor to display a picture with the input text information and a picture with the contents information separately.

10. The network display apparatus according to claim 9, wherein the control unit controls the signal processor to display the picture with the input text information and the picture with the contents information in the form of one of a PIP (Picture In Picture), a PBP (Picture By Picture), a POP (Picture Out Picture) and an OSD (On Screen Display) on the display unit.

11. The network display apparatus according to claim 9, wherein the contents information comprises:
at least one of movie information, music information, photpgraph information, file information and Internet information.

12. A method of controlling a computer having a transceiving unit to transmit and/or receive data to and/or from at least one external network display apparatus, comprising:
inputting text information from a user; and
outputting the input text information to the at least one external network display apparatus via the transceiving unit.

13. The method according to claim 12, further comprising:
displaying an interface picture with a text input menu to input the text information,
wherein the inputting of the text information comprises:
inputting the text information through the text input menu.

14. The method according to claim 13, further comprising:
displaying the interface picture with a point-of-output-time selection menu to input a point of output time when the input text information is to be outputted via the transceiving unit,
wherein the outputting of the input text information comprises:
outputting the input text information inputted at a point of time selected through the point-of-output-time selection menu to the at least one external network display apparatus.

15. The method according to claim 12 or 13, further comprising:
storing the contents information; and
inputting a transmission input signal,
wherein the outputting of the input text information comprises:
outputting at least one of the stored contents information and the input text information to the at least one external network display apparatus.

16. A method of displaying an image on a network display apparatus, comprising:
transmitting and/or receiving pre-set contents information and text information inputted by a user to and/or from an external computer via a network;
processing the contents information and the input text information and outputting the processed contents information and input text information to a display unit; and
controlling a signal processor to display the contents information and the input text information on the display unit.

17. The method of claim 16, wherein the displaying occurs when the contents information and the input text information are received in a control unit via a transceiving unit.

18. A system to transmit and/or receive data, comprising:
a computer having a first transceiving unit, comprising:
a user input unit to input text information, and
a control unit to output the input text information via the first transceiving unit when the input text information is inputted through the user input unit; and
a network display apparatus, comprising:
a display unit on which an image is displayed, and
a second transceiving unit to transmit and/or receive the text information inputted by a user to and/or from the computer via a network.

19. The system of claim 18, further comprising:
a signal processor to process the input text information and to output the processed input text information to the display unit; and
a control unit to control the signal processor to display the input text information on the display unit when the input text information are received in the control unit via the second transceiving unit.

20. The system of claim 19, wherein the second transceiving unit also transmits and/or receives pre-set contents information.

21. A method of controlling a system to transmit and/or receive data, the method comprising:
inputting text information by a user input unit;
outputting the input text information via a first transceiving unit when the input text information is inputted through the user input unit;
displaying an image on a display unit; and
transmitting and/or receiving the text information inputted by a user to and/or from the computer via a network.

22. A computer-readable recording medium to execute program codes to perform a method of a computer having a transceiving unit to transmit and/or receive data to and/or from at least one external network display apparatus, the method comprising:
inputting text information from a user; and
outputting the input text information to the at least one external network display apparatus via the transceiving unit.

23. A computer-readable recording medium to execute program codes to perform a method of a computer having a transceiving unit to transmit and/or receive data to and/or from at least one external network display apparatus, the method comprising:
transmitting and/or receiving pre-set contents information and text information inputted by a user to and/or from an external computer via a network;
processing the contents information and the input text information and outputting the processed contents information and input text information to a display unit; and
controlling a signal processor to display the contents information and the input text information on the display unit.

24. A computer-readable recording medium to execute program codes to perform a method of a computer having a transceiving unit to transmit and/or receive data to and/or from at least one external network display apparatus, the method comprising:
inputting text information by a user input unit;
outputting the input text information via a first transceiving unit when the input text information is inputted through the user input unit;
displaying an image on a display unit; and
transmitting and/or receiving the text information inputted by a user to and/or from the computer via a network.
